# EUROPÄISCHE PATENTSCHRIFT

(11) **EP 2 150 883 B1**
(45) Veröffentlichungstag und Bekanntmachung des Hinweises auf die Patenterteilung: **18.12.2019**
(21) Anmeldenummer: 08758567.5
(22) Anmeldetag: 09.05.2008
(51) Int. Cl.: G06F 3/048, B60R 16/023

(54) **MULTIFUNKTIONSANZEIGE- UND BEDIENVORRICHTUNG UND VERFAHREN ZUM BETREIBEN EINER MULTIFUNKTIONSANZEIGE- UND BEDIENVORRICHTUNG MIT VERBESSERTER AUSWAHLBEDIENUNG**
MULTIFUNCTION DISPLAY AND OPERATING DEVICE AND METHOD FOR OPERATING A MULTIFUNCTION DISPLAY AND OPERATING DEVICE HAVING IMPROVED SELECTION OPERATION
DISPOSITIF D'AFFICHAGE ET DE COMMANDE MULTIFONCTION ET PROCÉDÉ PERMETTANT DE FAIRE FONCTIONNER UN DISPOSITIF D'AFFICHAGE ET DE COMMANDE MULTIFONCTION AVEC UNE MEILLEURE COMMANDE DE SÉLECTION

(30) Priorität: 16.05.2007 DE 102007023290
(43) Veröffentlichungstag der Anmeldung: 10.02.2010
(73) Patentinhaber: Volkswagen Aktiengesellschaft, 38440 Wolfsburg (DE)
(72) Erfinder: WÄLLER, Christoph, 38102 Braunschweig (DE); MISSALL, Markus, 38102 Braunschweig (DE); THOM, Mathias, 38122 Braunschweig (DE)
(74) Vertreter: Obst, Bernhard
(86) Internationale Anmeldenummer: PCT/EP2008/003933
(87) Internationale Veröffentlichungsnummer: WO 2008/138638

(56) Entgegenhaltungen:
- EP-A- 0 701 926
- EP-A- 1 935 704
- WO-A-2004/078536
- DE-C1- 3 514 438

## Beschreibung

Die Erfindung betrifft eine Multifunktionsanzeige- und Bedienvorrichtung eines Kraftfahrzeugs und ein Verfahren zum Betreiben einer Multifunktionsanzeige- und Bedienvorrichtung, die eine Anzeigevorrichtung, eine mit der Anzeigevorrichtung verknüpfte Steuereinheit zum Umsetzen einer Benutzerschnittstelle sowie mindestens eine Erfassungseinheit umfasst, wobei die Benutzerschnittstelle mindestens einen Anzeigekontext und einen Bedienkontext umfasst, wobei in einem Anzeigemodus auf einer Anzeigefläche der Anzeigevorrichtung in einem Kontextinformationsbereich von dem Anzeigekontext abhängige Anzeigeinformationen und in einem Statusinformationsbereich zusätzlich kontextübergreifende Statusinformationen dargestellt werden, und über eine von der Erfassungseinheit erfassbare Betätigungshandlung Wechsel in einen Bedienmodus auslösbar ist, in dem in dem Kontextinformationsbereich von dem Bedienkontext abhängige Bedieninformationen zusätzlich oder alternativ dargestellt werden.

In modernen Kraftfahrzeugen werden heute häufig so genannte Multifunktionsanzeige- und Bedienvorrichtungen verwendet, die sowohl zum Anzeigen von Informationen über Fahrzeugsysteme, Fahrzeugfunktionen, fahrzeuginterne und/oder -externe Dienste usw. verwendet werden, als auch als kontextabhängige Bedienvorrichtung genutzt werden. Hierfür ist eine Anzeigefläche der Anzeigevorrichtung vorzugsweise mit einem positionsempfindlichen Sensor gekoppelt. Die Anzeigevorrichtung ist beispielsweise als Touchscreen ausgebildet, auf dem virtuelle Bedienelemente eingeblendet werden. Ebenso kann die Anzeigevorrichtung, auch wenn sie nicht als Touchscreen ausgebildet ist, verwendet werden, um anderen um die Anzeigevorrichtung herum oder beabstandet von der Anzeigevorrichtung angeordneten Bedienelementen jeweils eine Funktion, Funktionalität usw. zuzuordnen. Dies bedeutet, dass auf der Anzeigefläche eine so genannte Bedienelementzuordnung eingeblendet ist, die die Funktion, Funktionalität usw. für ein zugeordnetes Bedienelement angibt. Solche Informationen, die eine Bedienelementzuordnung angeben und virtuelle Bedienelemente, die auf einer Anzeigefläche angezeigt werden, werden gemeinsam mit solchen Informationen, die eine Bedienung unterstützen oder diese ermöglichen sollen, als Bedieninformationen angesehen.

Um eine übersichtliche und verständliche Benutzerschnittstelle für einen Fahrer und/oder Beifahrer eines Kraftfahrzeugs zu schaffen, ist es im Stand der Technik vorgesehen, die einzelnen Funktionen, Funktionalitäten usw. in Anzeige- und Bedienkontexte zu gliedern. In einem Anzeige- und Bedienkontext können somit einzelne Funktionen zusammengefasst werden, die beispielsweise ein bestimmtes Fahrzeugsystem charakterisieren und/oder zu dessen Bedienung notwendig sind. In einem Anzeigemodus werden hierbei vorzugsweise Informationen über das jeweilige mit einem Anzeigekontext korrespondierende Fahrzeugsystem, die jeweilige korrespondierende Fahrzeugfunktion usw. dargestellt. In einem zweiten Modus kann vorzugsweise eine Bedienung des entsprechenden Fahrzeugsystems bzw. der hiermit verknüpften Funktionen erfolgen. Ein solcher Modus wird auch als Bedienmodus bezeichnet. Hierfür werden Bedieninformationen, die vorzugsweise Bedienelemente und/oder Bedienelementzuordnungen umfassen, auf der Anzeigefläche dargestellt.

Aus der DE 102 31 806 A1 sind ein Verfahren und eine Vorrichtung zur Bedienung von Funktionsgruppen und/oder Funktionen mit einer Anzahl von Bedienelementen bekannt, wobei die Bedienelemente Anzeigefelder aufweisen. Dort ist vorgesehen, dass auf den Anzeigefeldern der Bedienelemente bedienebenenabhängig unterschiedliche Funktionsgruppen- und/oder Funktionszuweisungen generiert werden. Dies bedeutet, dass den einzelnen Bedienelementen kontextabhängig unterschiedliche Funktionen und/oder Funktionsgruppen zugeordnet werden können. Hierdurch ist es möglich, mit einer relativ geringen Anzahl von Bedienelementen eine Vielzahl von Funktionen und Funktionalitäten auszulösen.

Aus der WO 2005/066750 A1 ist ein Bediensystem für ein Fahrzeug mit einer Bildschirmanzeige mit mehreren Darstellungsbereichen zur Darstellung von Einträgen einer Menüstruktur mit mehreren Menüebenen, einem manuellen Betätigungsmittel zur Auswahl und/oder Aktivierung von mindestens einem Eintrag in einer aktuellen Menüebene aus der Menüstruktur, Sprachsteuermittel für eine redundante Auswahl und/oder Aktivierung von mindestens einem Eintrag aus der Menüstruktur, der gleichzeitig ein Schlüsselwort für die Sprachsteuerungsmittel bildet, bekannt. Dort ist vorgesehen, dass die Einträge der Menüstruktur in verschiedene Gruppen aufgeteilt sind, wobei eine erste Gruppe Einträge umfasst, die nur mit dem manuellen Betätigungsmittel auswählbar und/oder selektierbar sind und wobei eine zweite Gruppe Einträge umfasst, die mit dem manuellen Betätigungsmittel und/oder den Sprachsteuerungsmitteln auswählbar und/oder aktivierbar sind, und wobei die zweite Gruppe in mindestens zwei Begriffsgruppen aufgeteilt ist, die durch einfache Regeln festlegbar sind und die bestimmen, welche Schlüsselworte zur Menüführung aktuell eingebbar sind.

Aus der EP 0 701 926 A2 ist eine Multifunktions-Bedieneinrichtung für Kraftfahrzeuge bekannt, bei der eine Anwahl individueller Funktionen innerhalb einer Funktionsgruppe mittels eines einzigen ersten Bedienelementes erfolgt, das eine Enter-Funktion aufweist. Es ist vorgesehen, die Auswahl der der individuellen Funktionen übergeordneten Funktionsgruppen über diesen Funktionsgruppen zugeordnete zweite Bedienelemente durchzuführen. Durch den damit erreichten Verzicht auf eine Doppelbelegung eines oder mehrerer Bedienelemente für die Auswahl der übergeordneten Funktionsgruppen ist eine einfache Handhabung auch für eine große Anzahl komplexer Funktionsgruppen gewährleistet.

Aus der WO 2004/078536 A2 ist eine Schaltungsanordnung zur selektiven Schaltsignalgenerierung für eine Fahrzeugtürverriegelung bekannt. Ferner sind ein hiermit ausgestattetes Fahrzeug, ein System und ein Verfahren zur Absicherung von Gefährdungsbereichen sowie auch ein System, Systemkomponenten desselben und ein Verfahren zur Abwicklung eines hermetisch validierbaren Datentransfers bekannt.

Aus der DE 35 14 438 C1 ist eine zentrale Bedienungsein- und Informationsausgabe zur Steuerung von mehreren, in ein Fahrzeug eingebauten Zusatzgeräten bekannt. Diese umfasst eine Anzeigeeinheit, deren Anzeige in Felder zur Darstellung von Informationen und Funktionsauswahltabellen (Menüs) untergliederbar ist, sowie Bedientasten, die den Elementen der Menüs eindeutig zugeordnet sind; die Elemente der Menüs geben dabei Funktionen an, die durch die jeweiligen Bedienelemente anregbar sind. Einzelne, ein oder mehrere Zusatzgeräte bedienende Menüs sind dabei über wenigstens ein auf der Anzeige darstellbares Grundmenü anwählbar. Zusätzlich sind Bedienelemente vorhanden, die einen direkten Zugriff zu bestimmten Grundfunktionen des Gesamtsystems jederzeit und unabhängig vom augenblicklich angewählten Menu erlauben.

Um eine bessere Informationsvermittlung zu ermöglichen, ist in der veröffentlichten Patentanmeldung DE 10 2007 005 026.9 der Anmelderin dieser Anmeldung eine Multifunktionsanzeige- und Bedienvorrichtung beschrieben, die einen Darstellungsbereich der Anzeigefläche in einen Kontextinformationsbereich und einen Statusbereich unterteilt. In dem Statusbereich werden Informationen angezeigt, die zwar häufig einem der Anzeige- und Bedienkontexte zuordenbar sind, jedoch auch in den jeweils anderen Anzeige- und Bedienkontexten für einen Nutzer von hohem Interesse sind. Insbesondere umfassen die Informationen des Statutbereichs der vorgeschlagenen Multifunktionsanzeige- und Bedienvorrichtung Kontextkennungsinformationen, die Informationen über die unterschiedlichen auswählbaren Anzeige- und Bedienkontexte umfassen. Ferner umfasst der Statusbereich vorzugsweise Informationen, die von einem Nutzer häufig begehrt werden, beispielsweise vorgewählte Temperaturwerte für eine Innenraumtemperatur eines Kraftfahrzeugs, Informationen über einen Wiedergabestatus eines Audiosystems, über eine aktuelle Medienquelle des Audiosystems (CD-Spieler, Radio, MP3-Player, Speicherkarte, Mobiltelefon usw.), eine Uhrzeit, eine Außentemperatur oder Ähnliches. Hier wird das auch in einem Bedienkontext bestehende Informationsinteresse des Nutzers verbessert bedient.

Alle bekannten Systeme haben gemein, dass die Anzeigefläche der Multifunktionsanzeige- und Bedienvorrichtung begrenzt ist. Insbesondere in einem Bedienkontext, müssen die Bedieninformationen angepasst an die Bedürfnisse des Bedienens dargestellt werden. Insbesondere in Situationen, in denen bei der Bedienung eine Auswahl zwischen mehreren gleichartigen Elementen oder eine Eingabe eines Werts zu erfolgen hat, ist diese mit den bekannten Vorrichtungen und Verfahren nur unbefriedigend möglich. Eine Betätigungshandlung, die eine solche Auswahl vornimmt oder unterstützt, wird als Auswahlbetätigungshandlung oder kurz Auswahlhandlung bezeichnet

Aufgabe der Erfindung ist es, eine Multifunktionsanzeige- und Bedienvorrichtung zu schaffen, mit der eine einfachere, insbesondere bedienhandlungsarme, und intuitivere Benutzung von unterschiedlichen Fahrzeugsystemen und/oder Diensten und/oder Funktionen möglich ist, mit denen insbesondere eine verbesserte Kontrolle bei einer Auswahlbetätigungshandlung möglich ist.

Die Aufgabe wird erfindungsgemäß durch eine Multifunktionsanzeige- und Bedienvorrichtung mit den Merkmalen des Patentanspruchs 1 sowie ein Verfahren zum Betreiben einer Multifunktionsanzeige- und Bedienvorrichtung mit den Merkmalen des Patentanspruchs 5 gelöst. Vorteilhafte Ausgestaltungen der Erfindung ergeben sich aus den Unteransprüchen.

Nach einem ersten Aspekt wird eine optimale Ausnutzung der zur Verfügung stehenden Anzeigefläche unter Berücksichtigung des Informationsinteresses dadurch gewährleistet, dass ein möglichst maximaler Platz für Bedieninformationen, insbesondere virtuelle Bedienelemente verwendet wird. Sind zur Vornahme und/oder Kontrolle einer Auswahlhandlung weitere Informationen notwendig, so werden diese als Auswahlinformationen bezeichneten weiteren Informationen als gegenüber anderen Informationen, die gegebenenfalls in einem Bedienmodus zusätzlich zu den reinen Bedieninformationen angezeigt werden, beispielsweise Statusinformationen, priorisiert angesehen und so zur Anzeige gebracht, so dass eine Orientierung des Nutzers möglichst wenig beeinträchtigt wird und eine Bedienungssicherheit nicht nachteilig beeinflusst wird. Hierfür ist bei einer eingangs genannten Multifunktionsanzeige- und Bedienvorrichtung eines Kraftfahrzeugs vorgesehen, dass über eine weitere erfassbare Betätigungshandlung ein Wechsel in einen Auswahlbedienmodus auslösbar ist, in dem mit einer Auswahl eines Bedienparameters verknüpfte Auswahlinformationen in dem Statusinformationsbereich dargestellt werden. Dies bedeutet, dass bei einem Betrieb der Anzeige- und Bedienvorrichtung in dem Bedienmodus ein Überwachen der Erfassungseinheit stattfindet, um bei einem Erfassen einer weiteren Betätigungshandlung in einen Auswahlbedienmodus zu wechseln, wobei in dem Auswahlbedienmodus in dem Statusinformationsbereich mit einer Auswahl eines Bedienparameters verknüpfte Auswahlinformationen dargestellt werden.

Hierdurch wird erreicht, dass zusätzlich zu dem Kontextinformationsbereich, mit der Auswahl eines Bedienparameters verknüpfte Auswahlinformationen in dem Statusinformationsbereich dargestellt werden. Die in dem Kontextinformationsbereich im Bedienmodus dargestellten Bedieninformationen werden hierbei nicht verändert. Hierüber wird erreicht, dass eine Orientierung eines Nutzers nicht negativ beeinträchtigt wird. Sind in dem Kontextinformationsbereich beispielsweise virtuelle Bedienelemente dargestellt, so können diese sowohl im Bedienmodus als auch im Auswahlbedienmodus in derselben Größe und am selben Darstellungsort angezeigt werden. Der Auswahlbedienmodus kann als ein Unterbetriebsmodus der Multifunktionsanzeige- und Bedienvorrichtung angesehen werden. Als Bedienparameter wird jede Größe oder jedes Element aus einer Liste von Elementen angesehen, die als Parameter für eine Funktion oder Funktionalität eines über die Multifunktionsanzeige- und Bedienvorrichtung bedienbaren Systems nutzbar sind. Obwohl im Bedienmodus grundsätzlich Statusinformationen als wichtige Informationen für den Nutzer angesehen werden, wird in einer Auswahlsituation das Bedürfnis höher eingeschätzt, die mit der Auswahl in unmittelbarem Zusammenhang stehenden Auswahlinformationen darzustellen. Hierüber wird eine Auswahl der Informationen oder eine Rückmeldung über die Auswahl eines Bedienparameters deutlich verbessert. Auswahlinformationen sind somit jene Informationen, die den auszuwählenden Parameter charakterisieren, beispielsweise mögliche Werte vorgeben oder visualisieren. Werte können sowohl Zahlenwerte als auch Begriffe, Symbole usw. sein.

Bei einer bevorzugten Ausführungsform umfassen die Auswahlinformationen diskrete Listenelemente. Dies ist beispielsweise vorteilhaft, wenn ein Musiktitel, eine Radiostation, eine bestimmte CD aus einer Liste von CDs, ein Ordner oder beispielsweise ein Wert aus mehreren vorgegebenen Werten einer Liste ausgewählt werden sollen.

Bei einer anderen bevorzugten Ausführungsform der Erfindung umfassen die Auswahlinformationen eine Visualisierung, insbesondere ein Verlaufsdiagramm oder ein Balkendiagramm, eines aus einem Auswahlbereich auswählbaren Parameterwerts. Ein Verlaufsdiagramm kann hierbei kontinuierlich oder diskret ausgestaltet sein.

Bei einigen Ausführungsformen kann vorgesehen sein, dass ein Wechsel von dem Anzeigemodus in den Bedienmodus von einem Betätigen eines Bedienelementes abhängig ist. Eine einfachere und intuitivere Bedienung erhält man jedoch erfindungsgemäß dadurch, dass die Erfassungseinheit eine berührungslos messende Positionsbestimmungseinheit umfasst, die eine Position eines Betätigungselements eines Nutzers, insbesondere eine Position eines Fingers, im Raum zumindest vor der Anzeigefläche ermitteln kann und eine Anwesenheit des Betätigungselements in einem räumlich vor der Anzeigefläche befindlichen Aktivierungsbereich als Betätigungshandlung erfassbar ist. Dies bedeutet, dass mittels einer berührungslos messenden Positionsbestimmungseinheit eine Position des Betätigungselements ermittelt werden kann und eine Annäherung des Betätigungselements, die zu einer Anwesenheit des Betätigungselements in einem räumlich vor der Anzeigefläche oder vor einem für eine Auswahl eines Parameters vorgesehenen Bedienelements befindlichen Aktivierungsbereich führt, als Betätigungshandlung erfasst wird. Nähert der Nutzer beispielsweise seine Hand einem Bedienelement, welches sowohl als gesondert ausgebildetes Bedienelement benachbart oder beabstandet zu der Anzeigefläche der Anzeigevorrichtung ausgebildet sein kann, oder einem virtuellen Bedienelement an, welches auf der Anzeigefläche dargestellt ist, so wird ohne eine gesonderte Betätigung eines Bedienelements aus dem Anzeigemodus in den Bedienmodus umgeschaltet.

In ähnlicher Weise ist es vorteilhaft, vorzusehen, dass mittels der mindestens einen Erfassungseinheit eine Anwesenheit des Betätigungselements in einem Betätigungsbereich als weitere Betätigungshandlung erfassbar ist, wobei der Betätigungsbereich einen Raumbereich angrenzend an mindestens ein Auswahlbedienelement umfasst, das zum Auswählen des Bedienparameters verwendbar ist. Wird also eine Anwesenheit des Betätigungselements in einem Betätigungsbereich erfasst, so kann hieraus abgeleitet werden, dass eine Auswahlbedienhandlung vorgenommen werden soll. In einer solchen Situation ist es vorteilhaft, anstelle der Statusinformationen, die kontextübergreifende Informationen vermitteln, konkrete mit der Auswahl des Bedienparameters verknüpfte Auswahlinformationen anzuzeigen. Eine Annäherung des Betätigungselements an ein so genanntes Auswahlbedienelement, führt somit bei einer bevorzugten Ausführungsform zu der (weiteren) Umschaltung aus dem Bedienmodus in den Auswahlbedienmodus. Dieses ermöglicht eine einfache intuitive Bedienung. Die Bewegung des Betätigungselements in einer Bewegung zunächst auf die Anzeigefläche zu wird als Betätigungshandlung erfasst und ein Wechsel aus dem Anzeigemodus in den Bedienmodus ausgelöst. Die weitere Bewegung auf ein Auswahlbedienelement wird als weitere Betätigungshandlung erfasst und löst den Wechsel in den Auswahlbedienmodus aus. Während die Betätigungshandlung mit einer Annäherung in einen Aktivierungsbereich verknüpft ist, der im Prinzip jede beliebige räumliche Form aufweisen kann, ist eine Annäherung in einen Betätigungsbereich, der nicht als räumlich Zusammenhängendes Gebiet definiert sein muss, sondern mehrere Teilbereiche umfassen kann, mit der weiteren Betätigungshandlung verknüpft.

Können in einem Bedienkontext unterschiedliche Parameter ausgewählt werden, so können gleichberechtigte Auswahlmodi nebeneinander und somit mehrere Betätigungsbereiche existieren.

Um eine konkrete Auswahlbedienhandlung zu erfassen, ist erfindungsgemäß vorgesehen, dass die mindestens eine Erfassungseinheit eine berührungsempfindliche Positionserfassungseinheit umfasst, die mit der Anzeigefläche zu einem Touchscreen ausgebildet ist. Dies bedeutet, dass die Anzeigevorrichtung der Multifunktionsanzeige- und Bedienvorrichtung als Touchscreen ausgebildet ist. Die Erfassungseinheit umfasst somit vorzugsweise sowohl eine berührungslos messende Positionsbestimmungseinheit als auch eine berührungsempfindliche Positionserfassungseinheit. Im Zusammenwirken dieser beiden ist eine optimale Bedienung der Multifunktionsanzeige- und Bedienvorrichtung möglich. Bei einer Annäherung wird aus dem Anzeigemodus in den Bedienmodus umgeschaltet und sobald eine Betätigungsabsicht erkannt wird, die zu einer Auswahlbedienhandlung führen soll, wird in den Auswahlbedienmodus gewechselt. In diesem werden die Auswahlinformationen anstelle der Statusinformationen in dem Statusbereich dargestellt.

Bei einer weiteren Ausführungsform der Erfindung kann vorgesehen sein, dass eine Auswahlhandlung, die eine Auswahl des Bedienparameters bewirkt, als weitere Betätigungshandlung erfasst wird. Dieses bedeutet, dass ein Umschalten in den Auswahlbedienmodus mit einer konkreten Auswahlhandlung einhergeht. Hierdurch wird erreicht, dass dem Nutzer eine Rückmeldung gegeben wird, die mit seiner Auswahlhandlung verknüpft ist. In einem Audiobedienkontext werden beispielsweise der durch eine Vorsprungtaste (NEXT-Taste) ausgewählte Titel zentral in dem Statusinformationsbereich angezeigt. Zu beiden Seiten benachbart werden die in einer Titelauswahlliste angeordneten Titel dargestellt. Der durch die Auswahlhandlung ausgewählte Titel wird vorzugsweise visualisiert hervorgehoben dargestellt. Eine solche Hervorhebung kann beispielsweise durch eine Einfärbung, ein von den anderen Einblendungen abweichendes Transparenzniveau, eine blinkende Darstellung usw. kenntlich gemacht werden. Bei einer solchen Ausführungsform, muss berührungslos messende Positionsbestimmungseinheit für eine berührungslos erfasste erste Betätigungshandlung nur eine "grobe" Positionsbestimmung relativ zu der Anzeigefläche oder Bedienelementen ermöglichen. Eine genaue Positionsauflösung innerhalb eines Aktivierungsbereichs ist nicht nötig. Somit kann eine relativ einfache Annäherungssensorik als berührungslos messende Positionsbestimmungseinheit verwendet werden, um eine Betätigungshandlung zu erfassen, die einen Wechsel aus dem Anzeigemodus in den Bedienmodus auslöst.

Eine Darstellung der mit der Auswahl verknüpften Auswahlinformationen bzw. der mit einer Bedienung verknüpften Bedieninformationen sind für einen Nutzer nur im Zusammenhang mit einer Auswahlhandlung bzw. einer Betätigungshandlung von Interesse. Daher ist es vorteilhaft, die Darstellung der Auswahlinformationen bzw. der Bedieninformationen allgemein zeitlich korreliert mit der Betätigungshandlung bzw. einer Auswahlbetätigungshandlung oder der weiteren Betätigungshandlung darzustellen. Gemäß der Erfindung ist daher eine Zeitbestimmungseinheit vorgesehen, um automatisch nach einem Ablauf einer Aktivierungsverweilzeitspanne ab einem Beenden der Betätigungshandlung einen Wechsel in den Anzeigemodus und/oder nach einer Auswahlinformationsverweilzeitspanne ab einem Beenden der weiteren Betätigungshandlung einen Wechsel aus dem Auswahlbedienmodus in den Bedienmodus oder den Anzeigemodus automatisch zu ermöglichen. Die Zeitbestimmungseinheit wird somit verwendet, um einen Ablauf einer Aktivierungsverweilzeitspanne ab einem Beenden der Betätigungshandlung und/oder einen Ablauf einer Auswahlinformationsverweilzeitspanne ab einem Beenden der weiteren Betätigungshandlung, die eine Auswahlhandlung sein kann, zu bestimmen. Nach dem Ablauf der Aktivierungsverweilzeitspanne wird automatisch in den Anzeigemodus gewechselt und/oder nach dem Ablauf der Auswahlinformationsverweilzeitspanne wird automatisch aus dem Auswahlbedienmodus in den Bedienmodus oder den Anzeigemodus gewechselt. Der Wechsel kann hierbei abrupt oder durch ein langsames Ausblenden, d.h. ein Absenken eines Deckungsniveaus (ein Erhöhen eines Transparenzniveaus), der Bedieninformationen und/oder Auswahlinformationen erfolgen.

Bei einer besonders bevorzugten Ausführungsform sind die Bedieninformationen und/oder die Auswahlinformationen transparent ausgestaltet und über den Anzeigeinformationen des Anzeigemodus und/oder den Statusinformationen dargestellt. Dieses bedeutet, dass beispielsweise transparent ausgestaltete virtuelle Bedienelemente über den Anzeigeinformationen, die im Anzeigemodus dargestellt werden, im Bedienmodus angezeigt werden. Hierdurch ist eine, wenn auch teilweise eingeschränkte, Informationserfassung der im Anzeigemodus dargestellten Informationen möglich. Ebenso vorteilhaft ist es, die Auswahlinformationen transparent über den Statusinformationen darzustellen. Hierdurch wird dem Nutzer die Möglichkeit gegeben, die Statusinformationen zeitgleich mit den Auswahlinformationen wahrzunehmen.

Die Merkmale des erfindungsgemäßen Verfahrens weisen dieselben Vorteile wie die entsprechenden Merkmale der erfindungsgemäßen Multifunktionsanzeige- und Bedienvorrichtung auf.

Die Erfindung wird nachfolgend anhand bevorzugter Ausführungsbeispiel unter Bezugnahme auf eine Zeichnung näher erläutert. Hierbei zeigen:
- Fig. 1: eine schematische Darstellung eines Kraftfahrzeugs mit einer Multifunktionsanzeige- und Bedienvorrichtung;
- Fig. 2: eine schematische Ansicht einer Anzeigefläche im Anzeigemodus einer Multifunktionsanzeige- und Bedienvorrichtung;
- Fig. 3: eine schematische Ansicht einer Anzeigefläche einer Multifunktionsanzeige- und Bedienvorrichtung im Bedienmodus;
- Fig. 4: eine schematische Ansicht einer Anzeigefläche einer Multifunktionsanzeige- und Bedienvorrichtung im Auswahlbedienmodus;
- Fig. 5: eine weitere schematische Ansicht einer Anzeigefläche einer Multifunktionsanzeige- und Bedienvorrichtung im Auswahlbedienmodus;
- Fig. 6-8: schematische Darstellungen eines Raumbereichs vor einer Multifunktionsanzeige- und Bedienvorrichtung zur Veranschaulichung eines Aktivierungs- und eines Betätigungsbereichs;
- Fig. 9, 10: schematische Ansichten einer Anzeigefläche einer Multifunktionsanzeige- und Bedienvorrichtung in einem zweiten Bedienmodus.

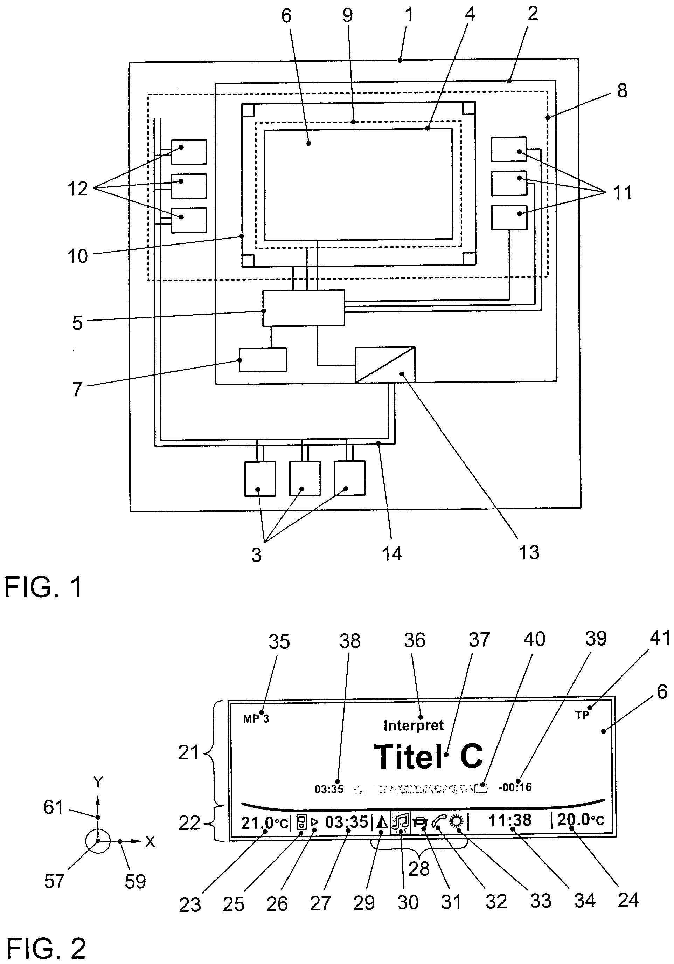

In Fig. 1 ist schematisch ein Kraftfahrzeug 1 dargestellt. Das Kraftfahrzeug 1 umfasst eine Multifunktionsanzeige- und Bedienvorrichtung 2. Die Multifunktionsanzeige- und Bedienvorrichtung 2 in dem Kraftfahrzeug 1 dient zum einen zum Vermitteln von Informationen an einen Nutzer und zum andern zum Bedienen von in die Multifunktionsanzeige- und Bedienvorrichtung 2 integrierten Funktionen und/oder weiteren Fahrzeugsystemen 3.

Die Multifunktionsanzeige- und Bedienvorrichtung 2 umfasst hierfür eine Anzeigevorrichtung 4. Die Anzeigevorrichtung 4 ist mit einer Steuereinheit 5 gekoppelt, die die Darstellung von Informationen auf der Anzeigevorrichtung 4 steuert. Die Anzeigevorrichtung 4 ist beispielsweise als LCD-Anzeige, als Plasmaanzeige oder Ähnliches ausgestaltet. Sie umfasst eine frei programmierbare Anzeigefläche 6.

Die Steuereinheit 5 ist mit einer Speichervorrichtung 7 gekoppelt, in der ein Programmcode abgelegt ist, der im Zusammenwirken mit der Steuereinheit 5, welche vorzugsweise als Rechnereinheit ausgebildet ist, eine Umsetzung einer Benutzerschnittstelle bewirkt. In der Speichervorrichtung 7 sind zusätzlich vorteilhafterweise die notwendigen Informationen abgelegt, um die an den Nutzer zu vermittelnden Informationen grafisch darzustellen.

Um Nutzereingaben erfassen zu können, ist eine Erfassungseinheit 8 vorgesehen. Die Erfassungseinheit 8 umfasst zum einen eine berührungsempfindliche Positionserfassungseinheit 9, die mit der Anzeigevorrichtung 4 gemeinsam als Touchscreen ausgebildet ist. Zusätzlich umfasst die Erfassungseinheit 8 eine berührungslos messende Positionsbestimmungseinheit 10. Mit dieser kann eine Position eines Betätigungselements, insbesondere eines Körperteils, vorzugsweise eines Fingers, eines Nutzers im Raum zumindest vor der Anzeigefläche 6 ermittelt werden.

Dem Fachmann sind verschiedene Ausgestaltungen für berührungslos messende Positionsbestimmungseinheiten bekannt. Eine solche berührungslos messende Positionsbestimmungseinheit kann beispielsweise mittels einer Übertragung von Hochfrequenzsignalen über den Nutzer arbeiten, wie dieses beispielsweise in der WO 2004/078536 beschrieben ist. Alternativ können auf Kameras basierende, ultraschallbasierte oder auf optischen Sensoren basierende Sensoreinheiten von der Positionsbestimmungseinheit verwendet werden.

Solche Sensoreinheiten, die ein optisches Verfahren verwenden, können beispielsweise gemäß folgendem Prinzip ausgestaltet sein. Eine Sende-LED strahlt ein rechteckförmig amplitudenmoduliertes Lichtsignal im optischen oder infraroten Wellenlängenbereich ab. Das an einem Objekt, beispielsweise dem Körperteil, reflektierte Lichtsignal wird von einer Fotodiode erfasst. Von einer Kompensations-LED wird ein um 180° fasenversetztes ebenfalls rechteckförmig amplitudenmoduliertes Referenzlichtsignal zu der Fotodiode über einen unveränderlichen und störungsfreien Lichtweg gesandt. Die Kompensations-LED wird über einen Regelkreis mittels eines Regelsignals so ausgeregelt, dass sich das empfangene reflektierte Lichtsignal der Sende-LED und das empfangene Referenzlichtsignal der Kompensations-LED an der Fotodiode aufheben und ein Gleichsignal detektiert wird. Eine Änderung des Regelsignals ist ein Maß für den Abstand des Objekts. Eine nach diesem Prinzip ausgestaltete Sensoreinheit ist weitgehend unabhängig von Temperatur- und Helligkeitsschwankungen. Werden mehrere solcher Sensoreinheiten beabstandet zueinander angeordnet, so kann über eine Triangulation die Position des Körperteils im Raum dreidimensional bestimmt werden.

Bei der beschriebenen Ausführungsform kann somit eine Betätigungshandlung sowohl mittels der berührungsempfindlichen Positionserfassungseinheit 9, die mit der Anzeigevorrichtung 4 als Touchscreen ausgebildet ist, als auch mittels der berührungslos messenden Positionsbestimmungseinheit 10 erfasst werden. Zusätzlich umfasst die Erfassungseinheit 8 Bedienelemente 11, die benachbart zu der Anzeigevorrichtung 4 angeordnet sind. Diese können beispielsweise als Tasten, Drehdrücksteller usw. ausgebildet sein. Zusätzlich kann die Erfassungseinheit 8 weitere Bedienelemente 12 umfassen, die über eine Schnittstelle 13 der Multifunktionsanzeige- und Bedienvorrichtung 2 und einen Datenbus 14 mit der Steuereinheit 5 gekoppelt sind. Über die Bedienelemente 11 und die weiteren Bedienelemente 12 können somit auch Betätigungshandlungen erfasst werden. Über den Datenbus 14 sind ebenfalls die mittels der Multifunktionsanzeige- und Bedienvorrichtung 2 bedienbaren Fahrzeugsysteme 3 verknüpft.

Die beschriebene Multifunktionsanzeige- und Bedienvorrichtung ist so ausgestaltet, dass mittels der Steuereinheit 5 und einem in der Speichervorrichtung 7 abgelegten Programmcode eine Benutzerschnittstelle umgesetzt ist. In Fig. 2 ist eine Ansicht der Anzeigefläche 6 in einem Anzeigemodus der Benutzerschnittstelle schematisch dargestellt. Die Anzeigefläche 6 umfasst in einem oberen Bereich einen so genannten Kontextinformationsbereich 21 und in einem unteren Bereich einen Statusinformationsbereich 22. In dem Kontextinformationsbereich 21 sind Informationen eines Anzeigekontextes, hier eines Audiowiedergabekontextes, grafisch dargestellt. Im Statusinformationsbereich 22 sind kontextübergreifende Informationen dargestellt. Am linken unteren Rand 23 und am rechten unteren Rand 24 des Statusinformationsbereichs 22 sind jeweils Temperaturangaben dargestellt. Die Temperaturangaben geben jeweils eine gewünschte Temperatur in der ihrer Anzeigeposition entsprechenden Fahrzeughälfte wieder. Dies bedeutet, dass auf der linken Fahrzeugseite eine Temperatur von 21°C und auf der rechten Seite des Fahrzeugs eine Temperatur von 20°C im Innenraum des Kraftfahrzeugs vorherrschen sollen. Ein aktuelles Quellensymbol 25 gibt eine Schallquelle an. Im dargestellten Beispiel ist die Schallquelle ein MP3-Player. Ein Dreieck 26 deutet an, dass gegenwärtig ein Titel wiedergegeben wird. Eine Wiedergabezeitangabe 27 gibt eine bereits verstrichene Abspieldauer des gegenwärtig wiedergegebenen Titels an. Ebenso gut könnte eine Restspieldauer des wiedergegebenen Titels, eine Gesamtabspieldauer einer CD oder einer als Playliste bezeichnete Wiedergabeliste usw. angegeben sein. In einer Mitte des Statusinformationsbereichs 22 befindet sich ein so genanntes Kontextkennungsfeld 28, in dem unterschiedliche Anzeige- und Bedienkontexte jeweils mittels einer symbolhaft ausgestalteten Kontextkennung dargestellt sind. Die Kontextkennungen umfassen von links nach rechts eine Kontextkennung Navigation 29, eine Kontextkennung Audio 30, eine Kontextkennung Fahrzeug 31, eine Kontextkennung Telefon 32 und eine Kontextkennung Allgemein 33. Die aktuell ausgewählte Kontextkennung Audio 30 ist visuell hervorgehoben. In dem Kontextinformationsbereich 22 ist zusätzlich eine Uhrzeitangabe 34 dargestellt. Ebenso könnte ein aktuell ausgewählter Rundfunksender dargestellt sein, der im Hintergrund auf aktuelle Verkehrsinformationen überwacht wird. Die im Statusinformationsbereich 22 dargestellten Statusinformationen zeichnen sich dadurch aus, dass sie in unterschiedlichen Anzeige- und Bedienkontexten im Statusinformationsbereich 22 angezeigt werden.

In dem Kontextinformationsbereich 21 werden die zu der aktuellen Kontextkennung Audio 30 korrespondierenden Informationen dargestellt. Die dargestellten Informationen können hierbei situationsabhängig sein. Dies bedeutet, dass die wiedergegebenen Informationen von dem Zustand des Fahrzeugs bzw. des Fahrzeugsystems, eines Fahrzeugdienstes oder einer Fahrzeugfunktion abhängen können, über die Informationen im aktuellen Anzeigekontext dargestellt werden.

Die Anzeigeinformationen bei der Ansicht nach Fig. 2 umfassen in einer oberen linken Ecke eine alphanumerische Angabe 35 über die wiedergegebene Schallquelle. Ferner sind ein Interpret 36, ein Titel 37, eine bereits vergangene Abspieldauer 38 und eine verbleibende Abspieldauer 39 eines akustischen wiedergegebenen Lieds angegeben. Eine Abspieldauer im Verhältnis zu einer Gesamtdauer ist ebenfalls in einem Verlaufsdiagramm 40 grafisch dargestellt. In einer oberen rechten Ecke ist mittels einer weiteren alphanumerischen Angabe 41 angezeigt, dass ein so genannter "Traffic Pilot" aktiv ist. Dies bedeutet, dass im Hintergrund ein Verkehrsfunksender hinsichtlich einer Ausstrahlung von Verkehrsmeldungen überwacht wird.

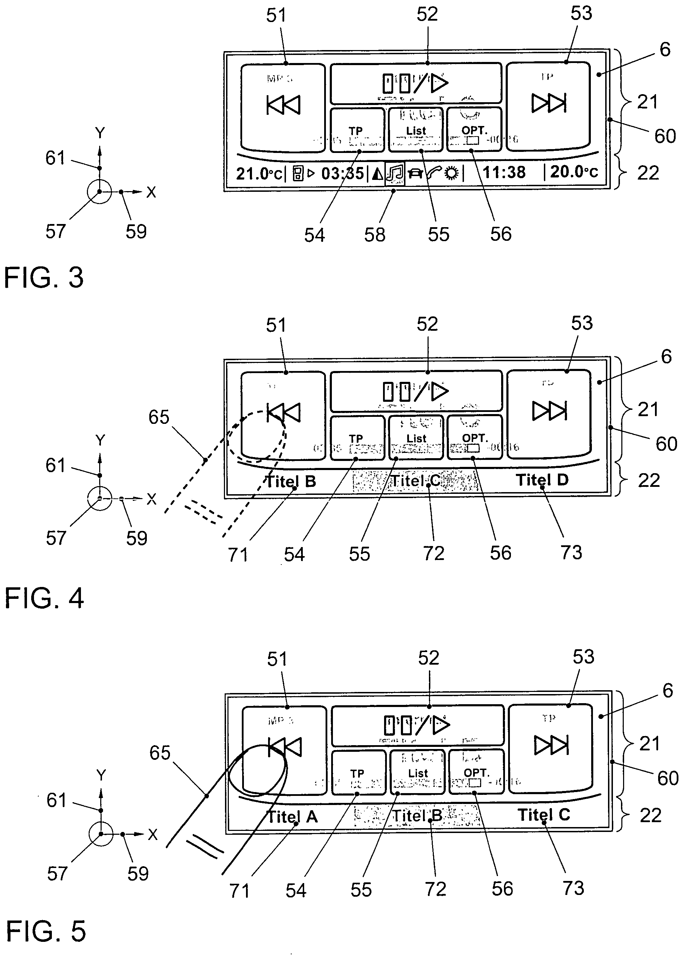

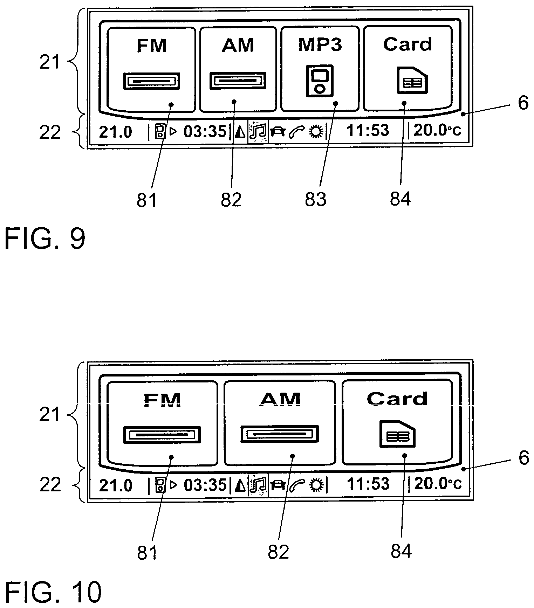

In Fig. 3 ist eine Ansicht der Anzeigefläche 6 im zum Audioanzeigekontext gehörenden Bedienkontext dargestellt. In dem Kontextinformationsbereich 21 sind als virtuelle Bedienelemente 51-56 ausgebildete Taster als Bedieninformationen im Vordergrund transparent über den Anzeigeinformationen, die im Anzeigemodus dargestellt werden und in Fig. 2 gezeigt sind, eingeblendet. Die virtuellen Bedienelemente 51-56 umfassen ein als Rücksprungtaste ausgebildetes Bedienelement 51, ein als Wiedergabe-/Pausetaste ausgebildetes Bedienelement 52, ein als Vorsprungtaste ausgebildetes Bedienelement 53, ein als Traffic-Pilot-Taste ausgebildetes Bedienelement 54, ein Listenbedienelement 55 und ein Optionenbedienelement 56. Über das Traffic-Pilot-Taste-Bedienelement 54 kann der Traffic-Pilot aktiviert und deaktiviert werden. Bei einer Betätigung des Listenbedienelements 55 und des Optionenbedienelements 56 wird jeweils ein weiteres Menü im Kontextdarstellungsbereich 21 zur Anzeige gebracht. Beispeisweise kann durch das Betätigen des Optionenbedienelements 56 in einen zweiten Bedienmodus versetzt werden, der unten exemplarisch mit Bezug auf Fig. 9 und 10 beschrieben ist.

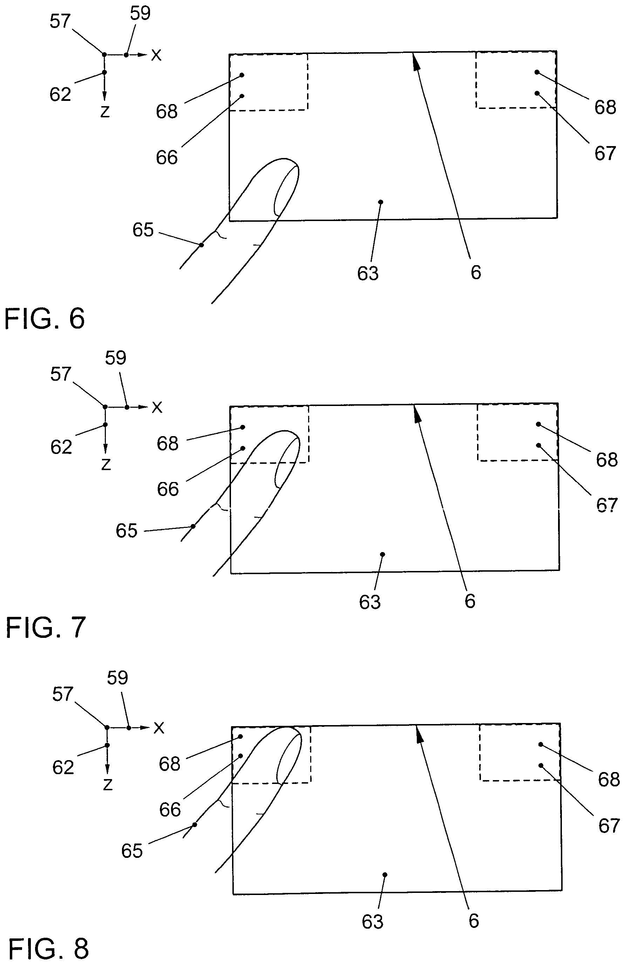

Auch im Bedienmodus der Benutzerschnittstelle werden im Statusinformationsbereich 22 dieselben Statusinformationen wie im Anzeigemodus angezeigt. Ein Wechsel aus dem Anzeigemodus in den Bedienmodus kann durch eine Betätigungshandlung bewirkt werden. Eine solche Betätigungshandlung kann beispielsweise das Betätigen eines der Bedienelemente 11 nach Fig. 1 umfassen. Ebenso kann als Betätigungshandlung eine Annäherung an die Anzeigefläche mittels eines Betätigungselements, beispielsweise eines Fingers, genutzt werden. Hierfür ist vorzugsweise relativ zu der Anzeigefläche 6 der Anzeigevorrichtung 4 nach Fig. 1 ein Raumbereich als Aktivierungsraumbereich definiert. Nimmt man an, dass die Anzeigefläche 6 sich in einer XY-Ebene befindet, in der ebenfalls der Ursprung eines rechthändigen Koordinatensystems liegt, so erstreckt sich der Aktivierungsbereich vorzugsweise quaderförmig in positiver Z-Richtung, d.h. aus der Zeichenebene der Fig. 2 und 3, heraus. In Fig. 6 ist eine Draufsicht auf die XZ-Ebene dargestellt. In Fig. 3 ist ein Koordinatensystem 57, umfassend eine parallel zu einer Längsseite 58 der Anzeigefläche 6 orientierten X-Achse 59 und eine parallel zu einer kurzen Seite 60 der Anzeigefläche orientierten Y-Achse 61 dargestellt. Eine Z-Achse erstreckt sich senkrecht aus der Zeichenebene. Dasselbe Koordinatensystem 57 ist in Fig. 6 dargestellt. Die X-Achse 59 weist nach rechts und eine Z-Achse 62 nach unten. Ein Aktivierungsbereich 63 ist im dargestellten Beispiel ein quaderförmiges Raumgebiet vor der Anzeigefläche 6 der Anzeigevorrichtung. Wird mittels der berührungslos messenden Positionsbestimmungseinheit eine Anwesenheit eines Betätigungselementes 65, welches ein Finger eines Nutzers ist, festgestellt, so wird ein Wechsel von dem Anzeigemodus, der in Fig. 2 dargestellt ist, in den Bedienmodus, welcher in Fig. 3 dargestellt ist, bewirkt. Räumlich benachbart zu den als Vorsprungtaste und Rücksprungtaste ausgebildeten Bedienelementen 51 und 53 nach Fig. 3 sind jeweils Teilbereiche 66, 67 eines Betätigungsbereichs 68 definiert. Die Teilbereiche 66, 67 sind vorzugsweise entlang der Z-Achse gebildete virtuelle Extrusionskörper, die durch ein Extrudieren der virtuellen Bedienelemente 51 und 53 entlang der Z-Achse entstanden.

Wird eine Anwesenheit des Betätigungselements 65 in dem Betätigungsbereich 68 erfasst, so wird dies als weitere Bedienhandlung angesehen. Dieser Zustand ist in Fig. 7 grafisch dargestellt. Bei einer bevorzugten Ausführungsform wechselt die Benutzerschnittstelle nun in einen Auswahlbedienmodus.

In Fig. 4 ist eine Ansicht der Anzeigefläche 6 im Auswahlbedienmodus dargestellt. Die Ansicht gleicht der Ansicht im Bedienmodus nach Fig. 3, unterscheidet sich jedoch dadurch, dass im Statusinformationsbereich anstelle der Statusinformationen Auswahlinformationen dargestellt sind. Diese umfassen drei Titelinformationsfelder 71-73. In einer Mitte ist das Titelinformationsfeld Titel C 72 visuell gegenüber den links und rechts angeordneten Titelinformationsfeldern Titel B 71 und Titel D 73 dargestellt. Die Hervorhebung zeigt an, dass der Titel C der aktuell wiedergegebene Titel ist. Über ein Betätigen des Rücksprungtastebedienfelds 51 kann der Titel B ausgewählt werden und über ein Betätigen des Vorsprungtastebedienelements 53 der Titel D. Wird eine solche Betätigung vorgenommen, so ändern sich entsprechend die Auswahlinformationen in den Titelinformationsfeldern 71-73. Einem Nutzer wird hierdurch eine Auswahl eines Parameters, hier eines wiederzugebenden Titels, deutlich erleichtert. Um anzudeuten, dass das Betätigungslement 65 einen Abstand zu der Anzeigefläche aufweist, ist das Betätigungselement 65 in Fig. 4 gestrichelt dargestellt.

In Fig. 5 ist eine Ansicht im Auswahlbedienmodus dargestellt, bei der die Auswahl über ein Berühren der als Touchscreen ausgebildeten Anzeigefläche erfolgt ist. Der aktuell ausgewählte Titel ist nun Titel B, was durch eine grafische Hervorhebung angezeigt ist.

Die Berührung der Anzeigefläche durch das Betätigungselement 65 ist dadurch grafisch angedeutet, dass das Betätigungselement mittels einer durchgezogenen Linie dargestellt ist. Die zu Fig. 5 korrespondierende Ansicht in der XZ-Ebene ist in Fig. 8 dargestellt.

Wird das Betätigungselement 65 aus dem Betätigungsbereich 68 entfernt, so wird mittels einer Zeitbestimmungseinheit die Zeit ermittelt, die seit dem Verlassen des Betätigungsbereichs verstrichen ist. Ist diese größer als eine so genannte Auswahlinformationsverweilzeitspanne, so erfolgt ein Wechsel zurück in den Bedienmodus. Bei anderen Ausführungsformen kann vorgesehen sein, dass ein Wechsel in den Anzeigemodus erfolgt. Analog wird von der Zeitbestimmungseinheit die Zeit ab dem Verlassen des Aktivierungsbereichs bestimmt. Ist diese größer als eine Aktivierungsverweilzeitspanne, so wird aus dem Bedienmodus in den Anzeigemodus zurückgewechselt. Das Wechseln aus dem Auswahlbedienmodus in den Bedienmodus bewirkt, dass im Statusinformationsbereich 22 erneut die Statusinformationen angezeigt werden. Dieser Übergang kann abrupt oder durch ein Ausblenden der Auswahlinformationen erfolgen. In gleicher Weise kann ein Übergang aus dem Bedienmodus in den Anzeigemodus abrupt oder über eine Ausblendung der Bedieninformationen erfolgen.

Für eine einfachere Wahrnehmbarkeit der Auswahlinformationen werden diese vorzugsweise mit einer Deckkraft von 100 %, d.h. nicht transparent, im Statusinformationsbereich angezeigt. Bei anderen Ausführungsformen kann jedoch vorgesehen sein, dass auch die Auswahlinformationen transparent über den Statusinformationen angezeigt werden. Dieses bietet den Vorteil, dass auch im Auswahlinformationsmodus sämtliche Statusinformationen, wenn auch gegebenenfalls eingeschränkt, wahrnehmbar sind.

Bei weiteren Ausführungsformen bei denen keine Betätigungsbereiche definiert sind, kann ein Wechsel aus dem Bedienmodus in den Auswahlbedienmodus erst bei einer Betätigung eines mit der Auswahl des Parameters verknüpften Bedienelements vorgesehen sein. Bei diesen Ausführungsformen folgt auf die Darstellung der Fig. 3 gleich die Ansicht nach Fig. 5. Auch wenn bei dieser Ausführungsform vor der ersten Auswahlbetätigungshandlung keine "Vorausschau" möglich ist, so wird doch eine Kontrollmöglichkeit für die erfolgte Auswahl und eine "Vorausschau" für eine weitere Auswahlbetätigungshandlung geliefert.

Es sind noch weitere Ausführungsformen denkbar, bei denen die Betätigungshandlung und/oder weitere Betätigungshandlung zusätzlich über eines der Bedienelemente 11 oder der weiteren Bedienelemente 12 erfassbar sind.

Die Benutzerschnittstelle kann zusätzlich weitere Modi umfassen. Beispielsweise kann ein zweiter Bedienmodus vorgesehen sein, bei dem weitere Bedieninformationen vorzugsweise nicht transparent, d.h. als einzige Informationen, im Kontextinformationsbereich 21 der Anzeigefläche dargestellt werden. In Fig. 9 und 10 sind beispielhafte Ansichten der Anzeigefläche im zweiten Bedienmodus dargestellt. Hier ist ein weiterer vorteilhafter nicht erfindungsgemäßer Aspekt umgesetzt, mittels dem eine möglichst sichere und einfache Bedienung über die Multifunktionsanzeige und Bedienvorrichtung ermöglicht wird.

Im Kontextinformationsbereich 21 sind jeweils virtuelle Bedienelemente 81 bis 84 und 81, 82 und 84 dargestellt, über die jeweils eine Audioquelle auswählbar ist. Über das Bedienelement 81 kann ein frequenzmoduliertes Radio (FM), über das Bedienelement 82 ein amplitudenmoduliertes Radio (AM), über das Bedienelement 83 ein MP3-Player und über das Bedienelement 84 eine Speicherkarte als Audioquelle ausgewählt werden. Die Bedienelemente 81 bis 84 sind so ausgestaltet, dass sie jeweils gleich groß dargestellt sind und eine Fläche des Kontextinformationsbereichs 21 möglichst optimal ausnutzen. Angezeigt werden hierbei nur Bedienelemente für die tatsächlich verfügbaren Audioquellen. Wird beispielsweise der MP3-Player als System aus dem Kraftfahrzeug entfernt, so erhält man die Anzeige nach Fig. 10 im zweiten Bedienmodus. Das Bedienfeld 83 wird nicht mehr dargestellt. Stattdessen werden die Bedienfelder 81, 82 und 84 vergrößert dargestellt, so dass sie die gesamte Fläche des Kontextinformationsbereichs optimal ausnutzen. Vorteilhafter weise werden somit auf einer als Touchscreen ausgebildeten Anzeigevorrichtung auf der Anzeigefläche jeweils nur die virtuellen Bedienelemente dargestellt, über eine aktuell tatsächlich verfügbare Funktion oder ein aktuell verfügbares System auswählbar und/oder bedienbar sind. Diese virtuellen Bedienelemente werden auf der Anzeigefläche in dem Kontextinformationsbereich so angeordnet, dass eine möglichst hohe Treffwahrscheinlichkeit bei einer Betätigungshandlung gewährleistet ist. Vorzugsweise werden die virtuellen Bedienelemente mit gleicher Fläche und möglichst gleichbeabstandet zueinander auf der Anzeigefläche dargestellt, so dass möglichst die gesamte für kontextabhängigen Informationen zur Verfügung stehende Flache der Anzeigefläche ausgenutzt wird.

Der zweite Bedienmodus lässt sich auch mit einer modifizierten Multifunktionsanzeige- und Bedienvorrichtung eines Kraftfahrzeugs zum Anzeigen von Informationen über Fahrzeugsysteme, Fahrzeugfunktionen und/oder Diensten und Bedienen der Fahrzeugsysteme, Fahrzeugfunktionen und/oder Dienste umfassend eine Anzeigevorrichtung, eine mit der Anzeigefläche verknüpfte Steuereinheit zum Umsetzen einer Benutzerschnittstelle sowie mindestens eine mit der Anzeigevorrichtung gekoppelte Positionserfassungseinheit, mit der eine Betätigung durch eine Betätigungselement, insbesondere ein Körperteil, vorzugsweise einen Finger, eines Nutzers in Abhängigkeit von einer ermittelten Position des Betätigungselements relativ zu einer Darstellung auf der Anzeigefläche erfassbar ist, umsetzen, wobei abhängig von einem Zustand des Kraftfahrzeugs, der Fahrzeugsysteme, der Fahrzeugfunktionen und/oder der Dienste nur bestimmte Bedienoptionen aller möglichen Bedienoptionen zur Verfügung stehen und in einem Bedienmodus jeweils nur Bedienelemente von den verfügbaren Bedienoptionen angezeigt werden, wobei die Darstellung der verfügbaren Bedienoptionen so erfolgt, dass eine möglichst optimale Betätigungssicherheit für eine Betätigungshandlung mit dem Betätigungselement erreicht wird.

Bei einer solchen modifizierten Multifunktionsanzeige- und Bedienvorrichtung oder den oben zuvor beschriebenen Multifunktionsanzeige- und Bedienvorrichtungen ist die Steuereinheit vorzugsweise ausgebildet, abhängig von einem Zustand des Kraftfahrzeugs, der Fahrzeugsysteme, der Fahrzeugfunktionen und/oder der Dienste diejenigen aktuell zur Verfügung stehenden aller möglichen Bedienoptionen zu ermitteln.

Allgemein gilt, dass die zur Verfügung stehenden Bedienoptionen in dem einen Bedienmodus (welches in dem oben im Zusammenhang mit Fig. 9 und 10 beschriebenen Beispiel der zweite Bedienmodus ist)vorzugsweise mittels virtueller Bedienelemente dargestellt sind, die jeweils über einen gesamten für Bedienelemente zur Verfügung stehenden Bereich der Anzeigefläche gleichmäßig verteilt angeordnet sind.

Ebenso ist es vorteilhaft, wenn die virtuellen Bedienelementen der zur Verfügung stehenden Bedienoptionen in dem einen Bedienmodus (welches in dem oben im Zusammenhang mit Fig. 9 und 10 beschriebenen Beispiel der zweite Bedienmodus ist) jeweils so dargestellt sind, dass sie entlang einer ausgezeichneten Richtung, beispielsweise parallel zur Längsseite der Anzeigefläche oder der kürzeren Seite, eine gleich Ausdehnung aufweisen.

Ferner sind die virtuellen Bedienelementen der zur Verfügung stehenden Bedienoptionen in dem einen Bedienmodus (welches in dem oben im Zusammenhang mit Fig. 9 und 10 beschriebenen Beispiel der zweite Bedienmodus ist) jeweils bevorzugt so dargestellt, dass ihnen flächig jeweils eine gleichgroßer Teilbereich des gesamten für Bedienelemente zur Verfügung stehenden Bereich der Anzeigefläche zugewiesen ist.

Vorzugsweise sind die virtuellen Bedienelementen der zur Verfügung stehenden Bedienoptionen in dem einen Bedienmodus (welches in dem oben im Zusammenhang mit Fig. 9 und 10 beschriebenen Beispiels der zweite Bedienmodus ist) jeweils so dargestellt, dass eine Summe ihrer Darstellungsflächen mindestens 75%, vorzugsweise 90%, am bevorzugtesten 100% des gesamten für Bedienelemente zur Verfügung stehenden Bereich überdecken.

Ferner ist es vorteilhaft, wenn die Bedienoptionen Bedienkontexten zugeordnet sind und wenn die Darstellungspositionen und/oder Darstellungsgrößen und/oder Auslösebereichsgrößen der zur Verfügung stehenden Bedienoptionen in dem einen Bedienmodus (welches in dem oben im Zusammenhang mit Fig. 9 und 10 beschriebenen Beispiels der zweite Bedienmodus ist) in Abhängigkeit von der Anzahl der im jeweiligen Bedienkontext zur Verfügung stehenden Bedienoptionen angepasst sind. Ein Auslösebereich umfasst die Positionen, an denen ein entsprechenden Bedienelement durch das Betätigungselement, insbesondere ein Körperteil, vorzugsweise einen Finger, ausgelöst werden kann. Das Betätigungselement befindet sich somit im Auslösebereich, wenn dessen von der Positionserfassungseinheit ermittelte Position in dem Auslösebereich liegt.

Die dargestellten Ausführungsformen sind lediglich beispielhafte Ausführungsformen einer Multifunktionsanzeige- und Bedienvorrichtung. Es sollte dem Fachmann klar sein, dass die hier vorgeschlagene Ausgestaltung einer Multifunktionsanzeige- und Bedienvorrichtung in der Weise, dass in einem Bedienmodus nur die zur Verfügung stehenden Bedienoptionen und dann jeweils entsprechend angepasst an die Anzahl der im jeweiligen Bedienkontext aktuell verfügbaren Bedienoptionen dargestellt werden, einen eigenständigen Aspekt beschreibt.

### Bezugszeichenliste

- 1: Kraftfahrzeug
- 2: Multifunktionsanzeige- und Bedienvorrichtung
- 3: Fahrzeugsysteme
- 4: Anzeigevorrichtung
- 5: Steuereinheit
- 6: Anzeigefläche
- 7: Speichervorrichtung
- 8: Erfassungseinheit
- 9: berührungsempfindliche Positionserfassungseinheit
- 10: berührungslos messende Positionsbestimmungseinheit
- 11: Bedienelemente
- 12: weitere Bedienelemente
- 13: Schnittstelle
- 14: Datenbus
- 21: Kontextinformationsbereich
- 22: Statusinformationsbereich
- 23: linker unterer Rand
- 24: rechter unterer Rand
- 25: Quellensymbol
- 26: Dreieck
- 27: Wiedergabezeit
- 28: Kontextkennungsfeld
- 29: Kontextkennung Navigation
- 30: Kontextkennung Audio
- 31: Kontextkennung Fahrzeug
- 32: Kontextkennung Telefon
- 33: Kontextkennung Allgemein
- 34: Uhrzeitangabe
- 35: alphanumerische Angabe
- 36: Interpret
- 37: Titel
- 38: vergangene Abspieldauer
- 39: verbleibende Abspieldauer
- 40: Verlaufsdiagramm
- 41: weitere alphanumerische Angabe
- 51-56: Bedienelemente
- 57: Koordinatensystem
- 58: Längsseite der Anzeigefläche
- 59: X-Achse
- 60: kurze Seite der Anzeigefläche
- 61: Y-Achse
- 62: Z-Achse
- 63: Aktivierungsbereich
- 65: Betätigungselement
- 66,67: Teilbereiche
- 68: Betätigungsbereich
- 71-73: Titelinformationsfelder
- 81-84: Bedienelemente

## Patentansprüche

1. Multifunktionsanzeige- und Bedienvorrichtung (2) eines Kraftfahrzeugs (1) umfassend eine Anzeigevorrichtung (4), eine mit einer Anzeigefläche (6) verknüpfte Steuereinheit zum Bereitstellen einer Benutzerschnittstelle sowie mindestens eine Erfassungseinheit (8), wobei die Benutzerschnittstelle mindestens einen Anzeigekontext und einen Bedienkontext umfasst, wobei ein Anzeigekontext einzelne ein bestimmtes Fahrzeugsystem charakterisierende Funktionen zusammenfasst und wobei ein Bedienkontext einzelne zum Bedienen eines bestimmten Fahrzeugsystems notwendige und mit dem Fahrzeugsystem verknüpfte Funktionen zusammenfasst, wobei in einem Anzeigemodus auf der Anzeigefläche (6) der Anzeigevorrichtung (4) in einem Kontextinformationsbereich (21) von dem Anzeigekontext abhängige Anzeigeinformationen und in einem Statusinformationsbereich (22) zusätzlich kontextübergreifende Informationen dargestellt werden, und über eine von der Erfassungseinheit (8) erfassbare Betätigungshandlung ein Wechsel in einen Bedienmodus auslösbar ist, in dem in dem Kontextinformationsbereich (21) von dem Bedienkontext abhängige Bedieninformationen zusätzlich oder alternativ dargestellt werden,
**dadurch gekennzeichnet, dass**
über eine weitere erfassbare Betätigungshandlung ein Wechsel in einen Auswahlbedienmodus auslösbar ist, in dem mit einer Auswahl eines Bedienparameters verknüpfte Auswahlinformationen ausschließlich in dem Statusinformationsbereich (22) dargestellt werden, wobei die in dem Kontextinformationsbereich im Bedienmodus dargestellten Bedieninformationen hierbei nicht verändert werden, und wobei Auswahlinformationen jene Informationen sind, die mögliche Werte des auszuwählenden Bedienparameters vorgeben oder visualisieren wobei die mindestens eine Erfassungseinheit (8) eine berührungslos messende Positionsbestimmungseinheit (10) umfasst, die eine Position eines Betätigungselements (65) eines Nutzers, insbesondere eine Position eines Fingers, im Raum zumindest vor der Anzeigefläche (6) ermitteln kann, und eine Anwesenheit des Betätigungselements (65) in einem räumlich vor der Anzeigefläche (6) befindlichen Aktivierungsbereich (63) als die Betätigungshandlung erfassbar ist, und wobei die mindestens eine Erfassungseinheit (8) eine berührungsempfindliche Positionserfassungseinheit (9) umfasst, die mit der Anzeigefläche (6) zu einem Touchscreen ausgebildet ist,
wobei eine Zeitbestimmungseinheit vorgesehen ist, um automatisch nach einem Ablauf einer Aktivierungsverweilzeitspanne ab einem Beenden der Betätigungshandlung einen Wechsel in den Anzeigemodus und/oder nach einer Auswahlinformationsverweilzeitspanne ab einem Beenden der weiteren Betätigungshandlung einen Wechsel aus dem Auswahlbedienmodus in den Bedienmodus oder den Anzeigemodus zu ermöglichen.

2. Multifunktionsanzeige- und Bedienvorrichtung (2) nach Anspruch 1, **dadurch gekennzeichnet, dass** mittels der mindestens einen Erfassungseinheit (8) eine Anwesenheit des Betätigungselements (65) in einen Betätigungsbereich (68) als weitere Betätigungshandlung erfassbar ist, wobei der Betätigungsbereich (68) einen Raumbereich angrenzend an mindestens ein Auswahlbedienelement umfasst, das zum Auswählen des Bedienparameters verwendbar ist.

3. Multifunktionsanzeige- und Bedienvorrichtung (2) nach einem der genannten Ansprüche, **dadurch gekennzeichnet, dass** eine Auswahlhandlung, die eine Auswahl des Bedienparameters bewirkt, als weitere Betätigungshandlung erfasst wird.

4. Multifunktionsanzeige- und Bedienvorrichtung (2) nach einem der genannten Ansprüche, **dadurch gekennzeichnet, dass** die Bedieninformationen transparent ausgestaltete virtuelle Bedienelemente umfassen, die im Bedienmodus über den Informationen des Anzeigemodus angezeigt werden.

5. Verfahren zum Betreiben einer Multifunktionsanzeige- und Bedienvorrichtung (2) eines Kraftfahrzeugs (1), die eine Anzeigevorrichtung (4), eine mit einer Anzeigefläche (6) verknüpfte Steuereinheit zum Bereitstellen einer Benutzerschnittstelle sowie mindestens eine Erfassungseinheit (8) umfasst, wobei die Benutzerschnittstelle mindestens einen Anzeigekontext und einen Bedienkontext umfasst, wobei ein Anzeigekontext einzelne ein bestimmtes Fahrzeugsystem charakterisierende Funktionen zusammenfasst und wobei ein Bedienkontext einzelne zum Bedienen eines bestimmten Fahrzeugsystems notwendige und mit dem Fahrzeugsystem verknüpfte Funktionen zusammenfasst, umfassend die Schritte:
Anzeigen von
von dem Anzeigekontext abhängigen Anzeigeinformationen in einem Kontextinformationsbereich (21) auf der Anzeigefläche (6) der Anzeigevorrichtung (4) und zusätzlich
von kontextübergreifenden Informationen in einem Statusinformationsbereich (22) bei einem Betrieb der Anzeige- und Bedienvorrichtung in einem Anzeigemodus; und Überwachen der Erfassungseinheit (8), um bei einem Erfassen einer Betätigungshandlung in einen Bedienmodus zu wechseln;
zusätzliches oder alternatives Anzeigen von von dem Bedienkontext abhängigen Bedieninformationen in dem Kontextinformationsbereich (21) in dem Bedienmodus;
**dadurch gekennzeichnet, dass**
bei einem Betrieb der Anzeige- und Bedienvorrichtung in dem Bedienmodus ein Überwachen der Erfassungseinheit (8) stattfindet, um bei einem Erfassen einer weiteren Betätigungshandlung in einen Auswahlbedienmodus zu wechseln, wobei in dem Auswahlbedienmodus mit einer Auswahl eines Bedienparameters verknüpfte Auswahlinformationen ausschließlich in dem Statusinformationsbereich (22) dargestellt werden, wobei die in dem Kontextinformationsbereich im Bedienmodus dargestellten Bedieninformationen hierbei nicht verändert werden, und wobei Auswahlinformationen jene Informationen sind, die mögliche Werte des auszuwählenden Bedienparameters vorgeben oder visualisieren,
wobei die mindestens eine Erfassungseinheit (8) eine berührungslos messende Positionsbestimmungseinheit (10) umfasst, die eine Position eines Betätigungselements (65) eines Nutzers, insbesondere eine Position eines Fingers, im Raum zumindest vor der Anzeigefläche (6) ermitteln kann, und eine Anwesenheit des Betätigungselements (65) in einem räumlich vor der Anzeigefläche (6) befindlichen Aktivierungsbereich (63) als die Betätigungshandlung erfasst wird, und
wobei die mindestens eine Erfassungseinheit (8) eine berührungsempfindliche Positionserfassungseinheit (9) umfasst, die mit der Anzeigefläche (6) zu einem Touchscreen ausgebildet ist und eine Auswahlhandlung, die eine Auswahl des Bedienparameters bewirkt, als weitere Betätigungshandlung erfasst wird,
wobei eine Zeitbestimmungseinheit verwendet wird, um einen Ablauf einer Aktivierungsverweilzeitspanne ab einem Beenden der Betätigungshandlung und/oder einen Ablauf einer Auswahlinformationsverweilzeitspanne ab einem Beenden der weiteren Betätigungshandlung zu bestimmen, und wobei nach dem Ablauf der Aktivierungsverweilzeitspanne automatisch in den Anzeigemodus gewechselt wird und/oder nach dem Ablauf der Auswahlinformationsverweilzeitspanne automatisch aus dem Auswahlbedienmodus in den Bedienmodus oder den Anzeigemodus gewechselt wird.

6. Verfahren nach Anspruch 5, **dadurch gekennzeichnet, dass** mittels der mindestens einen Erfassungseinheit (8) eine Anwesenheit des Betätigungselements (65) in einen Betätigungsbereich (68) als weitere Betätigungshandlung erfasst wird, wobei der Betätigungsbereich (68) einen Raumbereich angrenzend an mindestens ein Auswahlbedienelement umfasst, das zum Auswählen des Bedienparameters verwendbar ist.

7. Verfahren nach einem der Ansprüche 5 oder 6, **dadurch gekennzeichnet, dass** die Bedieninformationen transparent ausgestaltete virtuelle Bedienelemente umfassen, die im Bedienmodus über den Informationen des Anzeigemodus angezeigt werden.

## Claims

1. A multifunction display and operating device (2) of a motor vehicle (1) comprising a display device (4), a control unit linked to a display surface (6) for providing a user interface and at least one detection unit (8), wherein the user interface comprises at least one display context and an operating context, wherein a display context summarizes individual functions characterizing a specific vehicle system and wherein an operating context summarizes individual functions which are necessary and linked to the vehicle system for operating a specific vehicle system, wherein in a display mode on the display surface (6) of the display device (4) in a context information area (21) display information dependent on the display context and in a status information area (22) additional, cross-context information is displayed, and a change to an operating mode is able to be initiated by an actuating action detectable by the detection unit (8), in which in the context information area (21) operating information dependent on the operating context is additionally or alternatively displayed,
**characterized in that**
a change to a selection operating mode can be initiated by a further detectable actuating action, in which information linked to a selection of an operating parameter is displayed exclusively in the status information area (22), wherein the operating information displayed in the context information area in the operating mode is not changed in this connection, and wherein selection information is that information, which specifies or visualizes possible values of the operating parameter to be selected, wherein the at least one detection unit (8) comprises a position-determining unit (10), which measures in a contactless manner, which position-determining unit can determine a position of an actuating element (65) of a user, in particular, a positon of a finger, in the space at least in front of the display surface (6), and a presence of the actuating element (65) in an activation area (63) located spatially in front of the display surface (6) can be detected as the actuating action, and
wherein the at least one detection unit (8) comprises a contact-sensitive position detection unit (9), which is formed with the display surface (6) into a touchscreen, wherein a time-determination unit is provided, in order automatically to make possible a change to the display mode after an expiration of an activation dwell time period from an end of the actuating action and/or to make possible a change from the selection operating mode to the operating mode or to the display mode after a selection information dwell time period from an end of the further actuating action.

2. The multifunction display and operating device (2) according to Claim 1, **characterized in that** by means of the at least one detection unit (8) a presence of the actuating element (65) in an actuating area (68) can be detected as a further actuating action, wherein the actuating area (68) comprises a spatial region adjacent to at least one selection operating element, which can be used for selecting the operating parameter.

3. The multifunction display and operating device (2) according to any one of the mentioned claims, **characterized in that** a selection action, which brings about a selection of the operating parameter, is detected as a further actuating action.

4. The multifunction display and operating device (2) according to any one of the mentioned claims, **characterized in that** the operating information comprises transparently designed virtual operating elements, which are displayed in the operating mode above the information of the display mode.

5. A method for operating a multifunction display and operating device (2) of a motor vehicle (1), which comprises a display device (4), a control unit linked to a display surface (6) for providing a user interface and at least one detection unit (8), wherein the user interface comprises at least one display context and an operating context, wherein a display context summarizes individual functions characterizing a specific vehicle system and wherein an operating context summarizes functions necessary for operating a specific vehicle system and linked to the vehicle system, comprising the steps:
Display of display information dependent on the display context in a context information area (21) on the display surface (6) of the display device (4) and additionally of cross-context information in a status information area (22) during an operation of the display- and operating device in a display mode; and
monitoring of the detection unit (8), in order to change into an operating mode when an actuating action is detected;
additionally or alternatively display of operating information dependent on the operating context in the context information area (21) in the operating mode;
**characterized in that**
during an operation of the display and operating device in the operating mode a monitoring of the detection unit (8) occurs, in order to change to a selection operating mode when a further actuating action is detected, wherein in the selection operating mode selection information linked to a selection of an operating parameter is displayed exclusively in the status information area (22), wherein the operating information displayed in the context information area in the operating mode is in this connection not changed,
and wherein selection information is that information, which specifies or visualizes possible values of the operating parameter to be selected,
wherein the at least one detection unit (8) comprises a position-determining unit, which measures in a contactless manner, which position-determining unit can determine a position of an actuating element (65) of a user, in particular, a position of a finger, in the space at least in front of the display surface (6), and a presence of the actuating element (65) in an activation area (63) located spatially in front of the display surface (6) is detected as the actuating action, and
wherein the at least one detection unit (8) comprises a contact-sensitive position detection unit (9), which is formed with the display surface (6) into a touchscreen, and a selection action, which brings about a selection of the operating parameter, is detected as a further actuating action,
wherein a time-determination unit is used, in order to determine an expiration of an activation dwell time period from an end of the actuating action and/or an expiration of a selection information dwell time period from an end of the further actuating action and wherein after the expiration of the activation dwell time period is changed automatically into the display mode and/or after the expiration of the selection information dwell time period is changed automatically from the selection operating mode into the operating mode or the display mode.

6. The method according to Claim 5, **characterized in that** by means of the at least one detection unit (8) a presence of the actuating element (65) in an actuating area (68) is detected as a further actuating action, wherein the actuating area (68) comprises a spatial region adjacent to at least one selection operating element, which can be used for selecting the operating parameter.

7. The method according to any one of Claims 5 or 6, **characterized in that** the operating information comprises transparently designed virtual operating elements, which are displayed in the operating mode above the information of the display mode.

## Revendications

1. Dispositif d'affichage et de commande multifonction (2) d'un véhicule automobile (1) comprenant un dispositif d'affichage (4), une unité de commande associée avec une surface d'affichage (6) pour la mise à disposition d'une interface utilisateur ainsi qu'au moins une unité de détection (8), l'interface utilisateur comprenant au moins un contexte d'affichage et un contexte de commande, un contexte d'affichage regroupant des fonctions caractérisant un système du véhicule déterminé et un contexte de commande regroupant des fonctions nécessaires pour la commande d'un système du véhicule déterminé et associées avec le système du véhicule, moyennant quoi, dans un mode d'affichage sur la surface d'affichage (6) du dispositif d'affichage (4) dans une zone d'information de contexte (21), sont représentées des informations dépendant du contexte d'affichage et, dans une zone d'information d'état (22) en outre des informations indépendantes du contexte et par l'intermédiaire d'un actionnement détectable par l'unité de détection (8), un changement peut être déclenché dans un mode de commande dans lequel, dans la zone d'information de contexte (21), sont représentées en outre ou alternativement des infirmations de commande dépendant du contexte de commande,
**caractérisé en ce que**
par l'intermédiaire d'un autre actionnement détectable, un changement peut être déclenché dans un mode de commande de sélection, dans lequel des informations de sélection associées à une sélection d'un paramètre de commande sont représentées exclusivement dans la zone d'infirmation d'état (22), les informations de commande représentées dans la zone d'information de contexte dans le mode de commande n'étant alors pas modifiées et les informations de sélection étant les informations qui spécifient ou visualisent des valeurs possibles du paramètre de commande à sélectionner, l'au moins une unité de détection (8) comprenant une unité de détermination de position (10) à mesure sans contact, qui peut déterminer une position d'un élément d'actionnement (65) d'un utilisateur, plus particulièrement une position d'un doigt, dans l'espace au moins devant la surface d'affichage (6), et une présence de l'élément d'actionnement (65) peut être détectée, en tant qu'actionnement, dans une zone d'activation (63) se trouvant spatialement devant la surface d'affichage (6) et l'au moins une unité de détection (8) comprenant une unité de détection de position tactile (9) qui constitue, avec la surface d'affichage (6), un écran tactile,
une unité de détermination de temps étant prévue, afin de permettre, après l'écoulement d'une période de période de temporisation d'activation à partir d'une fin de l'actionnement, un passage au mode d'affichage et/ou après une période de temporisation d'information de sélection à partir d'une fin de l'autre actionnement, un passage du mode de commande de sélection vers le mode de commande ou le mode d'affichage.

2. Dispositif d'affichage et de commande multifonction (2) selon la revendication 1, **caractérisé en ce que**, au moyen de l'au moins une unité de détection (8), une présence de l'élément d'actionnement (65) dans une zone d'actionnement (68) peut être détectée en tant qu'un autre actionnement, la zone d'actionnement (68) comprenant une zone spatiale adjacente à au moins un élément de commande de sélection, qui peut être utilisé pour la sélection du paramètre de commande.

3. Dispositif d'affichage et de commande multifonction (2) selon l'une des revendications mentionnées, **caractérisé en ce qu'**une action de sélection, qui provoque une sélection du paramètre de commande, est détectée en tant qu'un autre actionnement.

4. Dispositif d'affichage et de commande multifonction (2) selon l'une des revendications mentionnées, **caractérisé en ce que** les informations de commande comprennent des éléments de commande virtuels conçus de manière transparente, qui sont affichés dans le mode de commande au-dessus des informations du mode d'affichage.

5. Procédé d'exploitation d'un dispositif d'affichage et de commande multifonction (2) d'un véhicule automobile (1) qui comprend un dispositif d'affichage (4), une unité de commande associée à une surface d'affichage (6), pour la mise à disposition d'une interface utilisateur ainsi qu'au moins une unité de détection (8), l'interface utilisateur comprenant au moins un contexte d'affichage et un contexte de commande, un contexte d'affichage regroupant des fonctions caractérisant un système du véhicule déterminé et un contexte de commande regroupant des fonctions nécessaires pour la commande d'un système du véhicule déterminé et associées avec le système du véhicule, comprenant les étapes suivantes :
affichage d'informations d'affichage dépendant du contexte d'affichage dans une zone d'informations de contexte (21) sur la surface d'affichage (6) du dispositif d'affichage (4) et en outre des informations indépendantes du contexte dans une zone d'informations d'état (22) lors d'un fonctionnement du dispositif d'affichage et de commande dans un mode d'affichage ; et
surveillance de l'unité de détection (8) afin de passer, lors de la détection d'un actionnement, à un mode de commande ;
affichage supplémentaire ou alternatif d'informations de commande dépendant du contexte de commande dans la zone d'informations de contexte (21) dans le mode de commande ;
**caractérisé en ce que**
lors d'un fonctionnement du dispositif d'affichage et de commande dans le mode de commande, une surveillance de l'unité de détection (8) a lieu afin de passer, lors d'une détection d'un autre actionnement, dans un mode de commande de sélection moyennant quoi, dans le mode de commande de sélection, sont représentées des informations de sélection associées à une sélection d'un paramètre de commande exclusivement dans la zone d'informations d'état (22), les informations de commande représentées dans la zone d'informations de contexte dans le mode de commande n'étant alors pas modifiées,
et les informations de sélection étant les informations qui spécifient ou visualisent des valeurs possibles du paramètre de commande à sélectionner,
l'au moins une unité de détection (8) comprenant une unité de détermination de position (10) à mesure sans contact, qui peut déterminer une position d'un élément d'actionnement (65) d'un utilisateur, plus particulièrement une position d'un doigt, dans l'espace au moins devant la surface d'affichage (6), et une présence de l'élément d'actionnement (65) étant détectée, en tant qu'actionnement, dans une zone d'activation (63) se trouvant spatialement devant la surface d'affichage (6) et l'au moins une unité de détection (8) comprenant une unité de détection de position tactile (9) qui constitue, avec la surface d'affichage (6), un écran tactile, et une action de sélection, qui provoque une sélection du paramètre de commande, est détectée en tant qu'un autre actionnement, une unité de détermination de temps étant utilisée, afin de déterminer l'écoulement d'une période de période de temporisation d'activation à partir d'une fin de l'actionnement, et/ou l'écoulement d'une période de temporisation d'information de sélection à partir d'une fin de l'autre actionnement et, après l'écoulement de la période de temporisation d'activation, un passage étant effectué vers le mode d'affichage et/ou après l'écoulement de la période de temporisation d'information de sélection, un passage étant effectué du mode de commande de sélection vers le mode de commande ou le mode d'affichage.

6. Procédé selon la revendication 5, **caractérisé en ce que**, au moyen de l'au moins une unité de détection (8), une présence de l'élément d'actionnement (65) dans une zone d'actionnement (68) est détectée en tant qu'autre actionnement, la zone d'actionnement (68) comprenant une zone spatiale adjacente à au moins un élément de commande de sélection qui peut être utilisé pour la sélection du paramètre de commande.

7. Procédé selon l'une des revendications 5 ou 6, **caractérisé en ce que** les informations de commande comprenant des éléments de commande virtuels conçus de manière transparente, qui sont affichés dans le mode de commande au-dessus des informations du mode d'affichage.
